# EUROPÄISCHE PATENTSCHRIFT

(11) **EP 2 628 379 B1**
(45) Veröffentlichungstag und Bekanntmachung des Hinweises auf die Patenterteilung: **25.02.2015**
(21) Anmeldenummer: 12195775.7
(22) Anmeldetag: 06.12.2012
(51) Int. Cl.: A01F 15/12

(54) **Ballenpresse**
Baling press
Presse à balles

(30) Priorität: 15.02.2012 DE 102012002797
(43) Veröffentlichungstag der Anmeldung: 21.08.2013
(73) Patentinhaber: Usines Claas France S.A.S, 57140 Metz (FR)
(72) Erfinder: Hesselmann, Ulrich, 54439 Saarburg (DE); Scharf, Thorsten, 66693 Orscholz (DE)

(56) Entgegenhaltungen:
- EP-A1- 2 229 812
- WO-A2-2007/136410
- DE-B3-102010 027 539
- FR-A5- 2 084 464
- US-B1- 7 877 970

## Beschreibung

Die vorliegende Erfindung betrifft eine Ballenpresse zum Verdichten von landwirtschaftlichem Erntegut zu Ballen. Ballenpressen sind im Wesentlichen in zwei Bauformen verbreitet, zum einen Rundballenpressen, in denen kontinuierlich zugeführtes Erntegut in einer Presskammer zu einem zylindrischen Ballen aufgerollt und durch den Druck von auβen umlaufenden Bändern verdichtet wird, und zum anderen Quaderballenpressen mit einer Presskammer in Form eines langgestreckten Kanals, in dem ein Presskolben hin und her bewegt wird, um schubweise zugeführtes Erntegut an einen in Entstehung befindlichen quaderförmigen Ballen anzupressen. Bei beiden Typen von Ballenpressen muss der Ballen, wenn er eine gewünschte Zielgröße erreicht hat, durch Umschlingen mit Bindematerial, meist Garn, stabilisiert werden, damit er nach Ausgabe aus der Presskammer nicht wieder zerfällt.

Um einen schnellen und wirtschaftlichen Erntevorgang zu gewährleisten, sollte das gesamte für einen Ernteeinsatz benötigte Bindegarn als Vorrat der Ballenpresse mitgeführt werden. Aus WO 2007/136410 A2 ist eine Quaderballenpresse bekannt, die ihren Garnvorrat in zwei beiderseits des Presskanals angeordneten Garnspeichern mit sich führt. Der Garnspeicher umfasst mehrere ziehharmonikaartig gefaltete Bodenbleche, die versetzt übereinander montiert sind, um sechseckige Fächer zu bilden, die jeweils eine Garnrolle mit in Querrichtung des Presskanals orientierter Längsachse aufnehmen.

In dem Bemühen, einen schnellen und effizienten Erntevorgang zu ermöglichen, werden immer größere und leistungsfähigere Ballenpressen entwickelt. Um trotz steigender Durchsätze der Pressen lange Zeit unterbrechungsfrei arbeiten zu können, muss auch der mitgeführte Garnvorrat wachsen, mit der Folge, dass das oberste Bodenblech dieses Garnvorrats immer weiter vom Boden entfernt ist und es für einen Benutzer immer mühseliger wird, ein so hoch liegendes Bodenblech zu beladen.

Ein Vorschlag zur Lösung dieses Problems ist in DE 10 2010 027 539 B3 beschrieben: beiderseits des Presskanals einer Quaderballenpresse angeordnete Garnspeicher sind bewegbar zwischen einer Arbeitsstellung oberhalb der Räder der Ballenpresse und einer abgesenkten Beladestellung.

In dieser Beladestellung ist der Garnspeicher durch Auslegerarme so weit vom Presskanal beabstandet gehalten, dass er bis etwa in Achshöhe des Rades abgesenkt werden kann, über dem er sich in der Arbeitsstellung befindet. Da das Gewicht der Garnrollen eines vollen Garnspeichers ohne weiteres mehrere Zentner erreichen kann, müssen die Auslegerarme entsprechend kräftig und belastbar sein. Ohne technische Hilfsmittel gelingt es einem Benutzer nicht, den voll beladenen Garnspeicher zurück in die Arbeitsstellung zu heben. Darüber hinaus ist es auch in der abgesenkten Stellung für einen Benutzer beschwerlich, den Garnspeicher aufzufüllen, da die zu unterst liegenden Bodenplatten nur in gebückter Haltung beladen werden können.

Aufgabe der vorliegenden Erfindung ist, eine Ballenpresse zu schaffen, die eine bequeme Beladung eines Garnspeichers trotz großer vertikaler Abmessungen ermöglicht.

Die Aufgabe wird gelöst, indem bei einer Ballenpresse mit einer Presskammer zum Verdichten von landwirtschaftlichem Erntegut zu Ballen, wenigstens einem Knoter zum Verknoten von um einen fertigen Ballen geschlungenem Garn und einem Garnspeicher, der Garnrollen für die Versorgung des Knoters in mehreren vertikal gestaffelten Magazinen aufnimmt, wenigstens ein erstes der Magazine zwischen einer Arbeitsstellung oberhalb eines zweiten Magazins und einer abgesenkten, gegen das zweite Magazin seitlich versetzten Stellung bewegbar ist. Magazine, die in ihrer Arbeitsstellung bereits gut erreichbar sind, können in dieser unbeweglich gehalten sein; indem lediglich diejenigen Magazine in eine abgesenkte Stellung versetzbar sind, bei denen dies für eine bequeme Erreichbarkeit erforderlich ist, ist die - insbesondere nach dem Beladen mit Garnrollen - zu bewegende Masse des Garnspeichers erheblich reduziert, so dass ein Benutzer das beladene Magazin im einfachsten Fall ohne technischen Hilfsmittel zurück in die Arbeitsstellung befördern kann bzw. dass einfache und kostengünstige Hilfsmittel ausreichen, um das beladene Magazin zurück in die Arbeitsstellung hieven zu können.

Die Garnrollen sind vorzugsweise in jedem Magazin entlang ihrer Längsachse, mit einander zugewandten Stirnseiten, aufgereiht. Eine solche Anordnung erleichtert es dem Benutzer, Garnrollen, die zur Versorgung eines gleichen Knoters vorgesehen - und dafür vorzugsweise in einem gleichen Magazin platziert - sind, untereinander so zu verbinden, dass, wenn eine Garnrolle aufgebraucht ist, mit dem Ende dieser Garnrolle sofort der Anfang der nächsten Garnrolle in den Knoter eingezogen und verarbeitet wird. Vorzugsweise werden Garnrollen ohne Wickelkern eingesetzt, die jeweils ein inneres und ein äußeres Ende aufweisen, wobei jeweils das äußere Ende einer Rolle mit dem inneren Ende der als nächste zu verbrauchenden Rolle zu verknoten ist. Die entlang ihrer Längsachse aufgereihte Anordnung der Garnrollen erleichtert es, wenn eine oder mehrere Garnrollen aufgebraucht sind, die verbliebenen im Magazin zu verschieben, ohne die Rollen gegeneinander zu bewegen. Es entstehen daher keine lose hängenden Garnstücke zwischen den Rollen, die sich im weiteren Betrieb der Presse verheddern und zu Schwierigkeiten bei der Garnversorgung der Knoter führen könnten. Der durch das Verschieben der Garnrollen frei gewordene Platz kann dann mit frischen Rollen aufgefüllt werden, bei denen wiederum das innere Ende mit dem äußeren Ende der jeweils vorhergehenden Rolle verknotet wird.

Vorzugsweise ist die Ballenpresse eine Quaderpresse mit einem langgestreckten Presskanal, an dem sich die Magazine des Garnspeichers platzsparend entlang erstrecken können. Es ist jedoch nicht ausgeschlossen, bewegliche Magazine wie oben beschrieben auch an einer Rundballenpresse einzusetzen.

Eine Auflageplatte des ersten Magazins sollte zwischen der Arbeitsstellung und der abgesenkten Stellung vorzugsweise unter Beibehaltung ihrer Orientierung bewegbar sein, um sicherzustellen, dass die Garnrollen darauf in der abgesenkten und der Arbeitsstellung gleich sicher liegen.

Vorzugsweise ist die Auflageplatte rinnenförmig, um einerseits ein Herunterfallen der Garnrollen sicher auszuschließen, andererseits ein Längsverschieben zu ermöglichen, das das Verknoten der aufeinanderfolgenden Garnrollen erleichtert.

Um einem Benutzer das Anheben des Magazins in die Arbeitsstellung zu erleichtern, kann ein Rückstellhilfsmittel vorgesehen sein, das eine in Richtung der Arbeitsstellung wirkende Rückstellkraft auf das in der abgesenkten Stellung befindliche erste Magazin ausübt.

Allgemein kann das Rückstellhilfsmittel ein durch eine Bewegung des ersten Magazins in die abgesenkte Stellung aufladbarer Energiespeicher wie etwa eine Gasdruckfeder sein.

Es kann aber auch das zweite Magazin als Energiespeicher genutzt werden, indem es gekoppelt an das erste Magazin durch eine Bewegung des ersten Magazins in die abgesenkte Stellung anhebbar ist.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Draufsicht auf eine erfindungsgemäße Ballenpresse;
- Fig. 2: eine Seitenansicht der Ballenpresse;
- Fig. 3: eine Ansicht von hinten eines Garnspeichers der Ballenpresse in Arbeitsstellung;
- Fig. 4: den Garnspeicher der Fig. 3 mit einem Magazin in abgesenkter Stellung; und
- Fig. 5: eine zu Fig. 4 analoge Ansicht eines Garnspeichers gemäß einer zweiten Ausgestaltung der Erfindung.

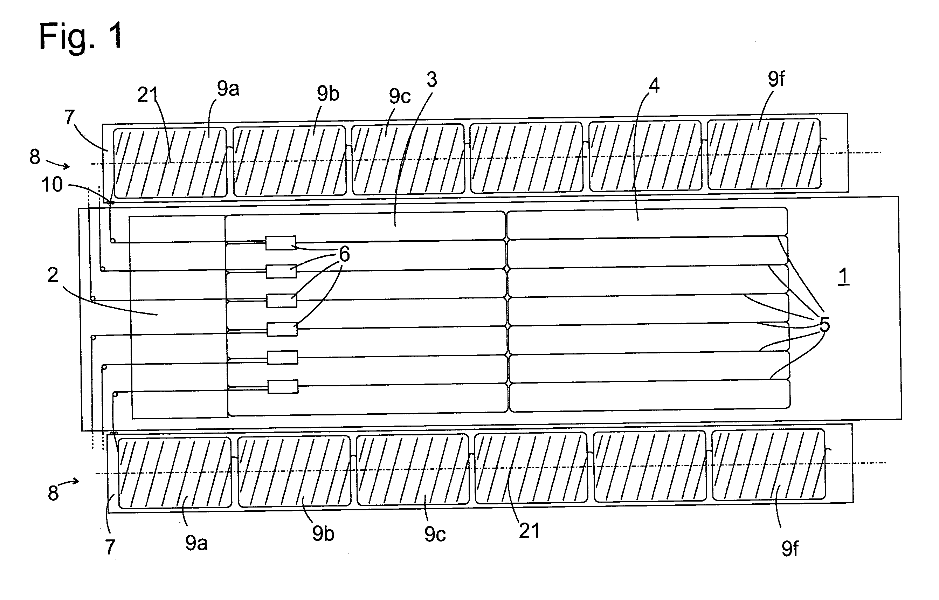

Fig. 1 zeigt die erfindungsgemäße Ballenpresse in einer stark schematisierten Draufsicht. In einem Presskanal 1 befinden sich ein in Fahrtrichtung hin und her beweglicher Presskolben 2, ein in Entstehung befindlicher Ballen 3 und ein fertiger Ballen 4. Die Ballen 3, 4 sind jeweils von mehreren Bindegarnschlaufen 5, hier sechs Stück, zusammengehalten. Über dem Presskanal sind in gleicher Zahl Knoter 6 angeordnet, um, wenn der Ballen 3 eine Sollgröße erreicht hat, die herum geschlungenen Bindegarnstränge in sich zu festen Schlaufen 5 zu verknoten. Geeignete Knoter sind in der Fachliteratur vielfach beschrieben, so dass ihr Aufbau hier nicht erläutert zu werden braucht. Es können einfachknoter zum Einsatz kommen, d.h. Knoter, die jeweils Anfang und Ende eines um den gesamten Ballens herumgeschlungenen Bindegarnstrangs miteinander verknoten, oder Doppelknoter, d.h. Knoter, die zwei Bindegarnstränge an jeweils zwei Stellen am Umfang eines Ballens miteinander verknoten. Jedem Knoter 6 ist ein Magazin 7 in einem von zwei spiegelbildlich zueinander beiderseits des Presskolbens angeordneten Garnspeichern 8 zugeordnet, das das zum Betrieb des Knoters 6 benötigte Bindegarn enthält.

Die Magazine 7 nehmen jeweils mehrere Garnrollen 9 auf, deren Längsachsen 21 jeweils deckungsgleich in Längsrichtung des Presskanals 1 ausgerichtet sind. Die Garnrollen 9 sind hohl, ohne Wickelkern, und ein vorderes Ende der zum Presskolben 2 nächstbenachbarten Garnrolle 9a ist aus dem inneren Hohlraum dieser Garnrolle 9a herausgezogen und über Ösen 10 oder gleichwertige Führungsmittel einem der Knoter 6 zugeführt. Ein hinteres Ende, das an der Außenseite dieser Garnrolle 9a zu finden ist, ist mit dem aus dem Hohlraum der in Fahrtrichtung nachfolgenden Garnrolle 9b herausgezogenen vorderen Ende verknotet. So bilden die in dem Magazin 7 aufgereihten Garnrollen einen einzigen, zusammenhängenden Bindegarnstrang, der jeweils einen Einfachknoter versorgt und so einen ununterbrochenen Betrieb der Ballenpresse ermöglicht, bis die in Fahrtrichtung hinterste Garnrolle 9f erschöpft ist. Bei einer Ballenpresse mit Doppelknoter können jedem Doppelknoter zwei Magazine mit zu einem einzigen Bindegarnstrang verbundenen Garnrollen zugeordnet sein, oder es können zwei Gruppen von jeweils untereinander zu einem einzigen Bindegarnstrang verbundenen Garnrollen in einem gleichen Magazins untergebracht sein.

Es versteht sich, dass die in der Figur gezeigte Zahl von sechs Garnrollen 9 pro Magazin 7 rein exemplarisch ist, und dass abweichende Zahlen sich je nach für die Magazine 7 verfügbarem Bauraum und Abmessungen der Garnrollen 9 ergeben können.

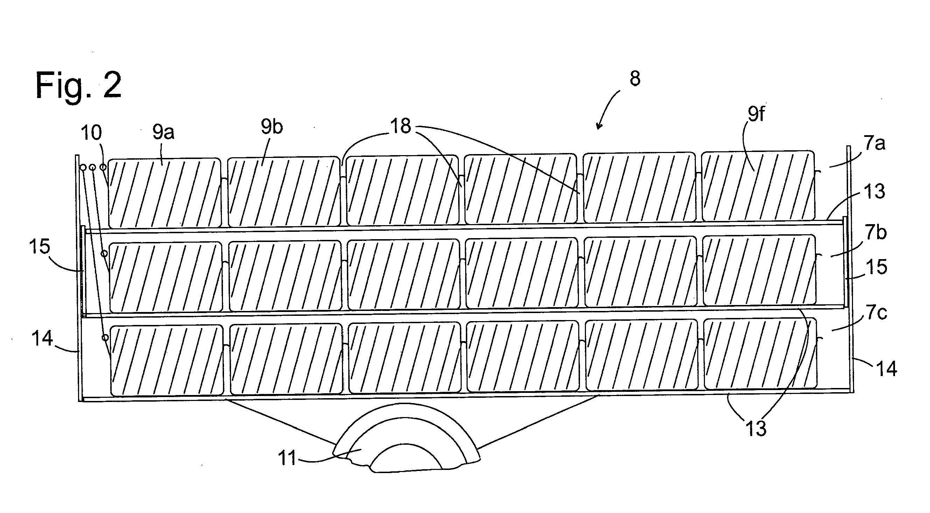

Um die insgesamt sechs Knoter 6, hier Einfachknoter, zu versorgen, sind hier sechs Magazine 7 vorgesehen, von denen jeder Garnspeicher 8 drei umfasst. Die Magazine 7 eines Garnspeichers 8 sind, wie in Fig. 2 gezeigt, übereinander und über einem Rad 11 der Ballenpresse angeordnet. Die Anordnung der Garnrollen 9 ist in jedem Magazin dieselbe; die in Fahrtrichtung der Ballenpresse vorderste Garnrolle 9a, d.h. die linke in Fig. 1 und 2, ist über Ösen 10 oder dergleichen mit dem jeweils zugeordneten Knoter 6 verbunden, und ihr äußeres Ende ist verknotet mit dem inneren Ende der in Fahrtrichtung nachfolgenden Garnrolle 9b.

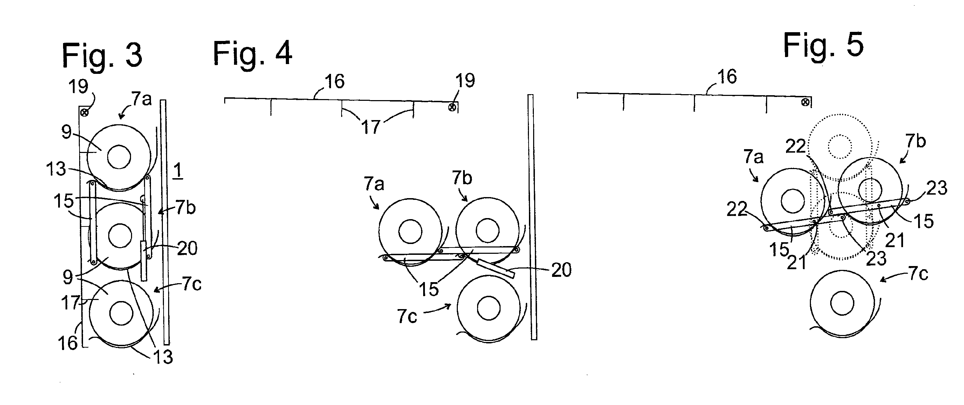

Fig. 3 ist eine schematische Darstellung eines der beiden Garnspeicher 8, gesehen in Längsrichtung des Presskanals 1. Jedes der drei hier mit 7a, 7b, 7c bezeichneten Magazine des Garnspeichers 8 umfasst ein rinnenförmiges Bodenblech 13, in dem die Garnrollen 9 ruhen. Die Bodenbleche 13 der beiden unteren Magazine 7b, 7c sind an Stirnwänden 14 (siehe Fig. 2) des Garnspeichers 8 befestigt. Das Bodenblech 13 des obersten Magazins 7 ist mit den Stirnwänden 14 über zwei Paar Lenker 15 verbunden. In der in Fig. 3 gezeigten, im Erntebetrieb eingenommenen Arbeitsstellung sind die Lenker 15 in einer vertikalen Stellung fixiert; ihre oberen Enden greifen am Bodenblech 13 des Magazins 7a an, die unteren Enden sind in Höhe des Bodenblechs 13 des nächst tieferen Magazins 7b an den Stirnwänden 14 befestigt.

Eine Verschlussklappe 16 des Garnspeichers 8 befindet sich in einer geschlossenen Stellung, in der sie die Magazine 7 nach außen verdeckt und an ihrer Innenseite angeordnete Finger 17 in Zwischenräume 18 (siehe Fig. 2) zwischen den Garnrollen 9 eingreifen, um diese während des Erntebetriebs an ihrem Platz zu fixieren.

In der Darstellung der Fig. 4 ist die Verschlussklappe 16 um eine entlang ihrer Oberkante in Längsrichtung des Presskanals 1 verlaufende Achse 19 hochgeklappt, um den Zugriff auf den Garnspeicher 8 zu ermöglichen. Die Magazine 7c, 7b befinden sich in etwa in Hüft- bis Brusthöhe eines vor dem Garnspeicher 8 stehenden Benutzers und können daher bequem mit Garnrollen 9 beladen werden, wenn die Verschlussklappe 16 offen und das Magazin 7a in der Arbeitsstellung der Fig. 3 ist.

In der Arbeitsstellung befindet sich das Magazin 7a etwa in Kopfhöhe des Benutzers oder noch höher, was das Beladen mit Garnrollen 9, die in der Praxis ein Gewicht von über 10kg pro Stück haben können, beschwerlich macht. Um das Beladen des Magazins 7a zu erleichtern, kann es, wie in Fig. 4 gezeigt, in eine abgesenkte Stellung gebracht werden, deren Höhe hier im Wesentlichen der des nächsttieferen Magazins 7b entspricht.

Wenn das Magazin 7a voll beladen ist, kann allein das Gewicht des eingeladenen Garns ohne weiteres mehr als 50 kg betragen. Um dem Benutzer das Zurückversetzen des Magazins 7a in die Arbeitsstellung zu erleichtern, können an beiden Stirnwänden 14 Federn, z.B. Gasdruckfedern 20, angelenkt sein, die an den Lenkern 15 angreifen, um sie in die Arbeitsstellung zurückzudrängen.

Einer in Fig. 5 gezeigten zweiten Ausgestaltung zufolge ist nur das Bodenblech 13 des untersten Magazins 7c ortfest mit den Stirnwänden 14 verbunden. Lenker 15 sind mit den Stirnwänden 14 jeweils über einen in etwa mittig gelegenen Angelpunkt 21 schwenkbar verbunden, und ihre Enden sind jeweils an die Bodenbleche 13 des oberen Magazins 7a und des mittleren Magazins 7b angelenkt. In einer in Fig. 5 punktiert dargestellten Arbeitsstellung sind die Magazine 7a bis 7c genauso wie in Fig. 3 übereinander angeordnet. Wenn jedoch die Verschlussklappe 16 geöffnet wird und die Lenker 15 geschwenkt werden, um das obere Magazin 7a zum Beladen in die mit durchgezogenen Linien dargestellte abgesenkte Stellung zu bringen, dann führt dies gleichzeitig zu einer Anhebung des Magazins 7b. Dieses bildet somit ein Gegengewicht, das nach dem Beladen des Magazins 7a das Zurückversetzen in die Arbeitsstellung erleichtert. Da der Hebelarm zwischen den Angelpunkten 21 und Angriffspunkten 22 des Magazins 7a an den Lenkern 15 länger ist als der Hebelarm zwischen dem Angelpunkt 21 und dem Angriffspunkten 23 des Magazins 7b, ist die Kraft, mit der ein Benutzer das Magazin 7a in die abgesenkte Stellung hinunterziehen muss, kleiner als das Gewicht des Magazins 7b und kann von einem Benutzer ohne übermäßige Mühe aufgebracht werden, auch wenn das Magazin 7b voll beladen ist.

### Bezugszeichen

- 1: Presskanal
- 2: Presskolben
- 3: Ballen
- 4: Ballen
- 5: Bindegarnschlaufe
- 6: Knoter
- 7: Magazin
- 8: Garnspeicher
- 9: Garnrolle
- 10: Öse
- 11: Rad
- 13: Bodenblech
- 14: Stirnwand
- 15: Lenker
- 16: Verschlussklappe
- 17: Finger
- 18: Zwischenräume
- 19: Achse
- 20: Gasdruckfeder
- 21: Angelpunkt
- 22: Angriffspunkt
- 23: Angriffspunkt

## Patentansprüche

1. Ballenpresse mit einer Presskammer (1) zum Verdichten von landwirtschaftlichem Erntegut zu Ballen, wenigstens einem Knoter (6) zum Verknoten von um einen fertigen Ballen (3, 4) geschlungenem Garn und einem Garnspeicher (8), der Garnrollen (9) für die Versorgung des Knoters (6) in mehreren vertikal gestaffelten Magazinen (7) aufnimmt, **dadurch gekennzeichnet, dass** wenigstens ein erstes der Magazine (7a) zwischen einer Arbeitsstellung oberhalb eines zweiten Magazins (7b) und einer abgesenkten, gegen das zweite Magazin (7b) seitlich versetzten Stellung bewegbar ist.

2. Ballenpresse nach Anspruch 1, **dadurch gekennzeichnet, dass** die Garnrollen (9) in jedem Magazin (7) entlang ihrer Längsachse (21) aufgereiht sind.

3. Ballenpresse nach Anspruch 1 oder 2, **dadurch gekennzeichnet, dass** die Presskammer (1) ein Presskanal (1) ist und dass die Magazine (7) sich entlang des Presskanals (1) erstrecken.

4. Ballenpresse nach einem der vorhergehenden Ansprüche, **dadurch gekennzeichnet, dass** eine Auflageplatte (13) des ersten Magazins (7a) zwischen der Arbeitsstellung und der abgesenkten Stellung unter Beibehaltung ihrer Orientierung bewegbar ist.

5. Ballenpresse nach Anspruch 4, **dadurch gekennzeichnet, dass** die Auflageplatte (13) rinnenförmig ist.

6. Ballenpresse nach einem der vorhergehenden Ansprüche, **gekennzeichnet durch** ein Rückstellhilfsmittel (20; 7b) zum Ausüben einer in Richtung der Arbeitsstellung wirkenden Rückstellkraft auf das erste Magazin (7a) in der abgesenkten Stellung.

7. Ballenpresse nach Anspruch 6, **dadurch gekennzeichnet, dass** das Rückstellhilfsmittel ein durch eine Bewegung des ersten Magazins (7a) in die abgesenkte Stellung aufladbarer Energiespeicher (20; 7b) ist.

8. Ballenpresse nach einem der vorhergehenden Ansprüche, **dadurch gekennzeichnet, dass** das zweite Magazin (7b) gekoppelt an das erste Magazin (7a) durch eine Bewegung des ersten Magazins (7a) in die abgesenkte Stellung anhebbar ist.

## Claims

1. A bale press comprising a pressing chamber (1) for compacting agricultural harvest material to constitute bales, at least one knotter (6) for knotting yarn which is passed around a finished bale (3, 4) and a yarn storage means (8) which accommodates yarn reels (9) for the supply of the knotter (6) in a plurality of vertically staggered magazines (7), **characterised in that** at least a first one of the magazine (7a) is moveable between an operative position above a second magazine (7b) and a lowered position of being laterally displaced relative to the second magazine (7b).

2. A bale press according to claim 1 **characterised in that** the yarn reels (9) are arranged in each magazine (7) in a row along their longitudinal axis (21).

3. A bale press according to claim 1 or claim 2 **characterised in that** the pressing chamber (1) is a pressing passage (1) and the magazines (7) extend along the pressing passage (1).

4. A bale press according to one of the preceding claims **characterised in that** a support plate (13) of the first magazine (7a) is moveable between the operative position and the lowered position while retaining its orientation.

5. A bale press according to claim 4 **characterised in that** the support plate (13) is channel-shaped.

6. A bale press according to one of the preceding claims **characterised by** a return assistance means (20; 7b) for exerting a return force acting in the direction the operative position on the first magazine (7a) in the lowered position.

7. A bale press according to claim 6 **characterised in that** the return assistance means is an energy storage means (20; 7b) which can be loaded up by a movement of the first magazine (7a) into the lowered position.

8. A bale press according to one of the preceding claims **characterised in that** the second magazine (7b) can be lifted in coupled relationship to the first magazine (7a) by a movement of the first magazine (7a) into the lowered position.

## Revendications

1. Presse à balles comprenant une chambre de pressage (1) pour compacter un produit de récolte agricole en balles, au moins un noueur (6) pour nouer une ficelle enroulée autour d'une balle finie (3, 4), et un dispositif de stockage de ficelle (8) qui reçoit des pelotes de ficelle (9) pour alimenter le noueur (6) dans plusieurs magasins (7) échelonnés verticalement, **caractérisée en ce qu'**au moins un premier des magasins (7a) est déplaçable entre une position de travail au-dessus d'un deuxième magasin (7b) et une position abaissée, décalée latéralement par rapport au deuxième magasin (7b).

2. Presse à balles selon la revendication 1, **caractérisée en ce que** les pelotes de ficelle (9) sont alignées le long de leur axe longitudinal (21) dans chaque magasin (7).

3. Presse à balles selon la revendication 1 ou 2, **caractérisée en ce que** la chambre de pressage (1) est un canal de pressage (1), et **en ce que** les magasins (7) s'étendent le long du canal de pressage (1).

4. Presse à balles selon l'une des revendications précédentes, **caractérisée en ce qu'**une plaque de support (13) du premier magasin (7a) est déplaçable, en conservant son orientation, entre la position de travail et la position abaissée.

5. Presse à balles selon la revendication 4, **caractérisée en ce que** la plaque de support (13) est en forme de gouttière.

6. Presse à balles selon l'une des revendications précédentes, **caractérisée par** un moyen de rappel (20 ; 7b) pour exercer une force de rappel agissant dans la direction de la position de travail sur le premier magasin (7a) dans la position abaissée.

7. Presse à balles selon la revendication 6, **caractérisée en ce que** le moyen de rappel est un accumulateur d'énergie (20 ; 7b) pouvant être chargé par un déplacement du premier magasin (7a) vers la position abaissée.

8. Presse à balles selon l'une des revendications précédentes, **caractérisée en ce que** le deuxième magasin (7b) est couplé au premier magasin (7a) de manière à pouvoir être levé par un déplacement du premier magasin (7a) vers la position abaissée.
